# EUROPEAN PATENT SPECIFICATION

(11) **EP 1 612 088 B1**
(45) Date of publication and mention of the grant of the patent: **11.02.2009**
(21) Application number: 04425470.4
(22) Date of filing: 30.06.2004
(51) Int. Cl.: B60N 2/015, B60N 2/06, B60N 2/12

(54) **A frame for supporting and moving a front seat of a motor vehicle**
Rahmen zum Tragen und Bewegen eines Vordersitzes eines Kraftfahrzeugs
Structure pour supporter et déplacer un siège avant d'une voiture

(43) Date of publication of application: 04.01.2006
(73) Proprietor: C.R.F. Società Consortile per Azioni, 10043 Orbassano (TO) (IT)
(72) Inventor: Pisino, Enrico, 10043 Orbassano (TO) (IT); Masoero, Giorgio, 10043 Orbassano (TO) (IT); Demontis, Salvatore, 10043 Orbassano (TO) (IT); Camardella, Pietro, 10043 Orbassano (TO) (IT); Re Fiorentin, Stefano, 10043 Orbassano (TO) (IT)
(74) Representative: Boggio, Luigi

(56) References cited:
- EP-A- 0 027 307
- GB-A- 1 286 439
- US-A- 1 615 246
- US-A- 2 057 591
- US-A- 3 368 840
- PATENT ABSTRACTS OF JAPAN vol. 0102, no. 31 (M-506), 12 August 1986 (1986-08-12) -& JP 61 064540 A (FUJI HEAVY IND LTD), 2 April 1986 (1986-04-02)

## Description

The present invention relates to a motor vehicle with an improved front seat. In particular, the present invention relates to a frame that is connected to a floor or to a bottom panel of the motor vehicle in such a way as to enable displacement of the seat up to an advanced end-of-travel position and enable access of the passengers to the rear seats through the front side doors of the motor vehicle.

As is known, in motor vehicles without rear doors, there is felt the need to facilitate the operations of getting into and getting out of the vehicle for passengers occupying the rear seats and, hence, to make available front seats that are able to slide forward considerably and so leave ample space for access to the back seats, in particular with respect to the rear uprights of the front side doors.

In order to meet the above need, front seats of a known type are connected to the floor or to the bottom panel of the motor vehicle by means of two guides or rails for longitudinal sliding. However, the known mode of connection using guides entails considerable encumbrance on the floor and hence obstacles to be overcome by the rear-seat passengers when they get into and get out of the car, sometimes fails to allow the front seats to slide forward sufficiently, and also entails relatively long times and high costs, in particular for ensuring precision of installation of the guides in the motor vehicle.

Furthermore, known solutions prove cumbersome not only when the rear-seat passengers have to get into or out of the vehicle through the front doors, but also as regards space for their legs and feet when they are sitting in their seats while the vehicle is travelling.

Patent application JP 61 064540 (corresponding to the preamble of claim 1) discloses a frame for a seat which has a single supporting rear foot movable along an adjusting device, which causes obstacle for the rear passengers on the floor surface.
Patent US 3368840 discloses a seat which has a rear portion provided with wheels rolling on a strip of metal and friction retaining devices, which cause obstacle over the floor surface on the side of the seat frame.

The purpose of the present invention is to provide a motor vehicle with a frame for supporting and moving a front seat which will enable the problems set forth above to be solved in a simple and economically advantageous way.

According to the present invention, a motor vehicle is provided, as defined in claim 1.

The invention will now be described with reference to the annexed drawings, which illustrate a non-limiting example of embodiment thereof, and in which:
- Figure 1 is a perspective view of a preferred embodiment of a motor vehicle according to the present invention;
- Figures 2 to 5 are side views of a sequence of movement of a seat frame of Figure 1; and
- Figure 6 is a side view of a variation of the frame of Figure 1.

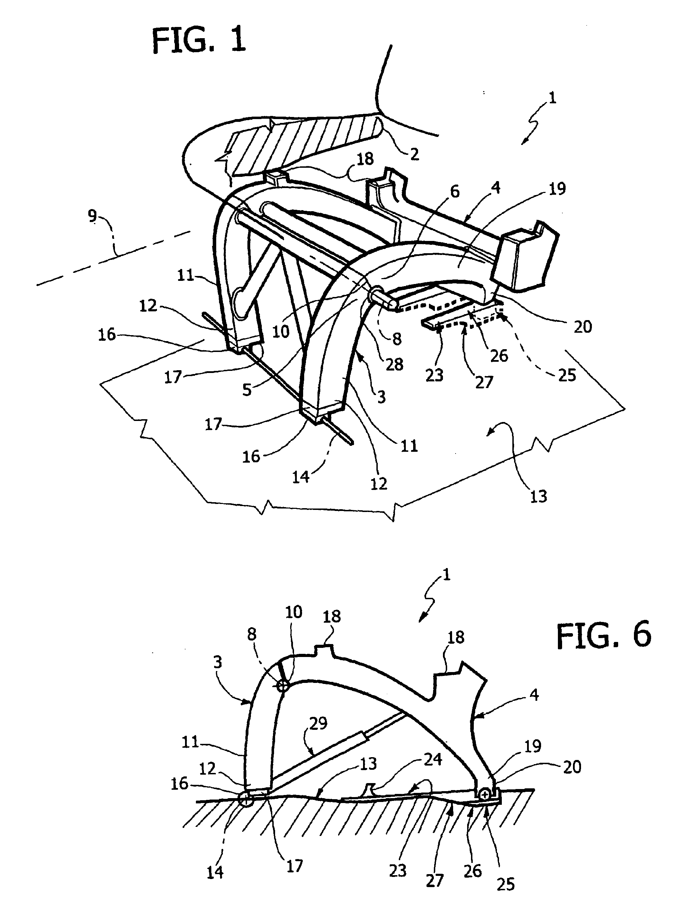

In Figure 1, the reference number 1 designated a frame for supporting and moving a front seat 2 (partially illustrated) of a motor vehicle.

The frame 1 comprises a front supporting structure 3 and a rear supporting structure 4, the top ends 5, 6 of which are hinged to one another about a horizontal axis 8, orthogonal to a longitudinal direction 9 of advance of the motor vehicle, for example by means of hinges 10 (illustrated schematically).

The structure 3 comprises a pair of supporting legs 11, the feet 12 of which are hinged to a supporting surface 13, i.e., to a bottom panel or loading floor of the motor vehicle, so as to rotate about an axis 14 parallel to the axis 8, in respective front coupling points, which are set at a distance apart from one another along the axis 14 itself.

In particular, coupling of the feet 12 to the surface 13 is obtained by means of respective hinges 16 (illustrated schematically) and by means of respective clamping devices 17 (illustrated schematically), which are releasable by means of a manual control (not illustrated) to uncouple and remove the structure 3 from the surface 13.

The structure 4, instead, comprises brackets 18, or other suitable means, for attachment of the seat 2, and a pair of side members 19 terminating in a common supporting foot 20, which is coupled to the surface 13 in a movable rear coupling point, longitudinally located at a distance from the axis 14 and located in an intermediate transverse position, preferably a central position, with respect to the two front coupling points.

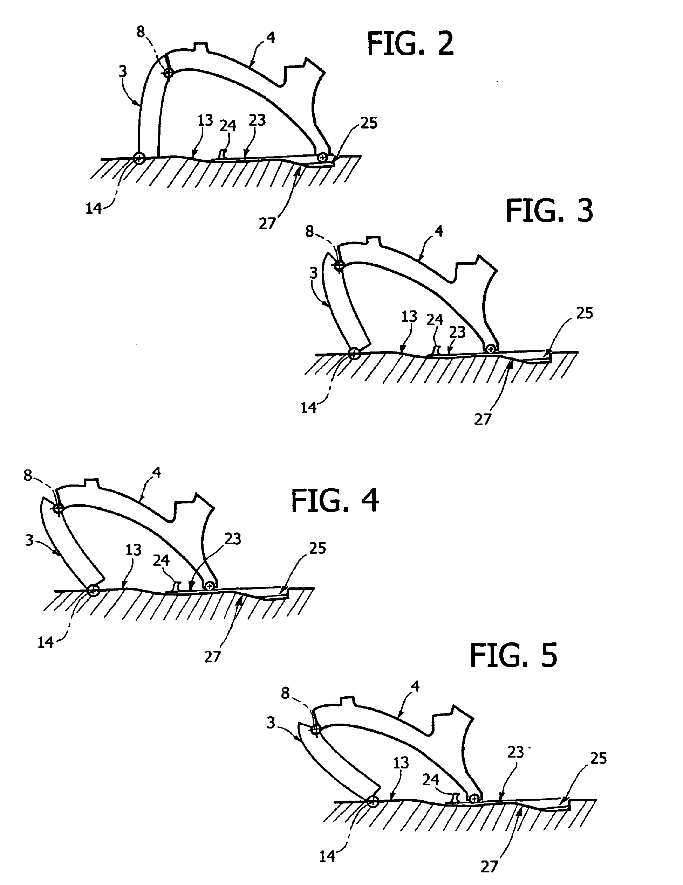

During rotation of the structure 3 about the axis 14, the structure 4, in addition to rotating about the movable axis 8 (in a counterclockwise direction as viewed in Figures 2 to 5), is mobile in a direction parallel to the direction 9 on the surface 13 between a rearward position, in which it enables a user to sit on the seat 2, and a forward position, in which it leaves space to enable access to the rear seats through a front door (not illustrated) set at the side of the seat 2.

With reference to Figures 2 to 5, the foot 20 carries a pair of coaxial idle rollers 22, or other suitable rolling means, coupled by resting on respective horizontal flat tracks 23, which are added into a fixed position on the surface 13, are substantially flush with the surface 13 itself, and end, at one side, with a stop device 24 fixed to the tracks 23 themselves and defining the end of travel for the forward position of the foot 20 and, at the other side, with respective retention devices 25.

The devices 25 are arranged in a fixed position completely underneath the ideal prolongation of the tracks 23 and define respective retention seats 26, which are radiused to the tracks 23 themselves by means of ramps 27 and house clamping locks (not illustrated). Said locks withhold the rollers 22, and consequently the foot 20, in a rearward position and are releasable by means of a device of a known type and not described in detail, for example a lever/Bowden-cable device actuated manually via a control (not illustrated) carried by the seat 2.

Once the rollers 22 have been left free by means of said control, a thrust member, for example a torsional spring 28 (illustrated schematically) associated to the axis 8, exerts an action of thrust such as to cause rotation of the structures 3 and 4 with respect to one another and displacement of the structure 4 in an automatic way towards the advanced position, or else simply such as to facilitate manual thrust by a user.

According to the variation illustrated in Figure 6, the thrust for causing advance of the structure 4 is exerted by a gas-operated spring 29, for example an air-operated spring, coupled to at least one of the structures 3, 4 and located in an intermediate position between the structures 3, 4.

From the foregoing description, it appears evident how the frame 1 bestows upon the seat 2 a movement such as to enable a relatively long travel of longitudinal advance, for example a travel of 240 mm, and at the same time presents extremely reduced encumbrance.

In fact, the structure 4 can slide or even be raised with respect to the surface 13.

The overall dimensions are reduced, then, by the particular three-legged configuration of the frame 1, i.e., by the presence of just three points of coupling to the surface 13, by the fact that the rear coupling point defined by the foot 20 is set in a central position with respect to the two front coupling points, and by the position of the spring 28 or 29.

Finally, from the foregoing description, it is evident that modifications and variations may be made to the frame 1 described herein, as long as they remain within the scope of the present invention as defined by the attached claims.

In particular, the structures 3 and 4 could be shaped in a different way from the one illustrated.

## Claims

1. A motor vehicle comprising:
- a floor surface (13);
- a front seat (2) supported by a frame (1) comprising:
a) a front supporting structure (3);
b) a rear supporting structure (4) comprising attachment means (18) for said front seat (2);
c) first means (10) for hinging to one another said supporting structures (3, 4) about a first axis (8) orthogonal to a longitudinal direction (9) of advance of the motor vehicle; and
d) second means (16) for hinging said front supporting structure (3) to said floor surface (13) about a second axis (14) parallel to said first axis (8); said rear supporting structure (4), during rotation of said front supporting structure (3) about said second axis (14), being longitudinally movable between a rearward position, in which it enables a user to sit on said front seat (2), and a forward position, in which it leaves space in the motor vehicle to enable access to the rear seats; said front supporting structure (3) comprising a pair of supporting feet (12) hinged about said second axis (14) in respective front coupling points set at a distance apart from one another; said rear supporting structure (4) comprising a single supporting foot (20) coupled to said floor surface (13) in a rear coupling point, longitudinally located at a distance from and located in an intermediate transverse position with respect to the two front coupling points; and
- releasable retention means (25) withholding said single supporting foot (20) in the rearward position;
**characterised by** also comprising on the floor surface at least one flat track (23) substantially flush with said floor surface (13); said single supporting foot (20) being longitudinally slidable on said flat track (23) between the rearward and forward positions; and wherein said releasable retention means (25) are arranged in a fixed position completely underneath the ideal prolongation of said flat track (23).

2. The motor vehicle according to claim 1, **characterized by** comprising end-of-travel means (24) fixed to said flat track (23) and defining an end of travel of said single supporting foot (20) in the forward position.

3. The motor vehicle according to claim 1 or 2, **characterized in that** said single supporting foot (20) carries rolling resting means (22) rolling on said flat track (23); said releasable retaining means engaging said rolling resting means (22) in the rearward position.

4. The motor vehicle according to anyone of the preceding claims, **characterised in that** said retention means (25) define at least a retention seat (26), which is radiused to said flat track (23) by means of a ramp (27) and houses a clamping lock.

5. The motor vehicle according to anyone of the preceding claims, **characterised by** the frame (1) also comprising thrust means (28, 29) exerting a thrust for displacing said rear supporting structure (4) towards the forward position once said retaining means (25) have been released.

6. The motor vehicle according to claim 5, **characterised in that** said thrust means comprise a gas-operated spring (29) located in an intermediate position between said front and rear supporting structures (3, 4).

7. The motor vehicle according to claim 5, **characterised in that** said thrust means comprise a torsional spring (28) associated to said first hinging means (10).

## Patentansprüche

1. Kraftfahrzeug, enthaltend:
eine Bodenfläche (13);
einen Vordersitz (2), der durch einen Rahmen (1) gehalten ist, enthaltend:
a) eine vordere Tragstruktur (3);
b) eine hintere Tragstruktur (4), enthaltend eine Anbringungseinrichtung (18) für den Vordersitz (2);
c) eine erste Einrichtung (10), die die Tragstrukturen (3, 4) um eine erste Achse (8) orthogonal zu einer Längsrichtung (9) der Fortbewegung des Kraftfahrzeugs gelenkig miteinander verbindet; und
d) eine zweite Einrichtung (16), die die vordere Tragstruktur (3) mit der Bodenfläche (13) um eine zweite Achse (14) parallel zur ersten Achse (8) gelenkig verbindet; wobei die hintere Tragstruktur (4) während der Drehung der vorderen Tragstruktur (3) um die zweite Achse (14) in Längsrichtung zwischen einer hinteren Stellung, in der ein Benutzer auf dem Vordersitz (2) sitzen kann, und einer vorderen Stellung, in der sie im Kraftfahrzeug Raum schafft, um einen Zugang zu den Rücksitzen zu ermöglichen, bewegt werden kann; wobei die vordere Tragstruktur (3) zwei Stützfüße (12) enthält, die um die zweite Achse (14) an jeweiligen vorderen Verbindungspunkten gelenkig angebracht sind, die in einem Abstand zueinander festgelegt sind; wobei die hintere Tragstruktur (4) einen einzelnen Stützfuß (20) enthält, der mit der Bodenfläche (13) an einem hinteren Verbindungspunkt verbunden ist, der in Längsrichtung in einem Abstand angeordnet ist und sich in einer zwischenliegenden, in Querrichtung angeordneten Position im Bezug auf die beiden vorderen Verbindungspunkte befindet; und
lösbare Rückhalteeinrichtungen (25), die den einzelnen Stützfuß (20) in der hinteren Stellung zurückhalten;
**dadurch gekennzeichnet, dass** es auf der Bodenfläche zudem wenigstens eine flache Schiene (23) enthält, die im wesentlichen mit der Bodenfläche (13) bündig ist; wobei der einzelne Stützfuß (20) in Längsrichtung auf der flachen Schiene (23) zwischen der hinteren und der vorderen Position gleiten kann; und wobei die lösbaren Rückhalteeinrichtungen (25) in einer unveränderlichen Position vollständig unter der idealen Verlängerung der flachen Schiene (23) angeordnet sind.

2. Kraftfahrzeug nach Anspruch 1, **dadurch gekennzeichnet, dass** es eine Bewegungsanschlagseinrichtung (24) enthält, die an der flachen Schiene (23) angebracht ist und einen Bewegungsanschlag für den einzelnen Stützfuß (20) in Vorwärtsrichtung enthält.

3. Kraftfahrzeug nach Anspruch 1 oder 2, **dadurch gekennzeichnet, dass** der einzelne Stützfuß (20) eine Rollauflagereinrichtung (22) trägt, die auf der flachen Scheine (23) rollt, wobei die lösbaren Rückhalteeinrichtungen mit der Rollauflagereinrichtung (22) in der hinteren Stellung in Eingriff gelangen.

4. Kraftfahrzeug nach einem der vorhergehenden Ansprüche, **dadurch gekennzeichnet, dass** die Rückhalteeinrichtungen (25) wenigstens einen Rückhaltesitz (26) definieren, der an die flache Schiene (23) mit Hilfe eine Rampe (27) angesetzt ist und ein Spannschloss enthält.

5. Kraftfahrzeug nach einem der vorhergehenden Ansprüche, **dadurch gekennzeichnet, dass** der Rahmen (1) zudem Schubeinrichtungen (28, 29) enthält, die einen Schub zum Verschieben der hinteren Tragstruktur (4) zu einer vorderen Stellung ausüben, sobald die Rückhalteeinrichtungen (25) gelöst sind.

6. Kraftfahrzeug nach Anspruch 5, **dadurch gekennzeichnet, dass** die Schubeinrichtungen eine gasbetätigte Feder (29) enthalten, die sich in einer Zwischenstellung zwischen der vorderen und der hinteren Tragstruktur (3, 4) befinden.

7. Kraftfahrzeug nach Anspruch 5, **dadurch gekennzeichnet, dass** die Schubeinrichtungen eine Torsionsfeder (28) beinhalten, die der ersten Gelenkeinrichtung (10) zugeordnet sind.

## Revendications

1. Véhicule à moteur comprenant :
- une surface de plancher (13) ;
- un siège avant (2) supporté par un châssis (1) comprenant :
a) une structure de support avant (3) ;
b) une structure de support arrière (4) comprenant des moyens de fixation (18) pour ledit siège avant (2) ;
c) des premiers moyens (10) pour articuler l'une à l'autre lesdites structures de support (3, 4) autour d'un premier axe (8) orthogonal à une direction longitudinale (9) de marche du véhicule à moteur ; et
d) des deuxièmes moyens (16) pour articuler ladite structure de support avant (3) à ladite surface de plancher (13) autour d'un deuxième axe (14) parallèle audit premier axe (8) ; ladite structure de support arrière (4), pendant la rotation de ladite structure de support avant (3) autour dudit deuxième axe (14), étant mobile dans la direction longitudinale entre une position arrière, dans laquelle elle permet à un utilisateur de s'asseoir sur ledit siège avant (2), et une position avant, dans laquelle elle laisse de l'espace dans le véhicule à moteur pour permettre un accès aux sièges arrière ; ladite structure de support avant (3) comprenant une paire de pieds de support (12) articulés autour dudit deuxième axe (14) en des points de raccordement avant respectifs disposés à distance l'un de l'autre ; ladite structure de support arrière (4) comprenant un unique pied de support (20) couplé à ladite surface de plancher (13) en un point de raccordement arrière, situé à distance longitudinale des deux points de raccordement avant et en position intermédiaire par rapport à ceux-ci dans la direction transversale ; et
- des moyens de retenue libérables (25) maintenant ledit unique pied de support (20) dans la position arrière ;
**caractérisé en ce qu'**il comprend également, sur la surface de plancher, au moins une piste plane (23) venant essentiellement à fleur de ladite surface de plancher (13) ; ledit unique pied de support (20) pouvant coulisser longitudinalement sur ladite piste plane (23) entre les positions arrière et avant ; et dans lequel lesdits moyens de retenue libérables (25) sont disposés à une position fixe située complètement en dessous de la prolongation idéale de ladite piste plane (23).

2. Véhicule à moteur selon la revendication 1, **caractérisé en ce qu'**il comprend des moyens de fin de course (24) fixés sur ladite piste plane (23) et définissant une fin de course dudit unique pied de support (20) à la position avant.

3. Véhicule à moteur selon la revendication 1 ou 2, **caractérisé en ce que** ledit unique pied de support (20) porte des moyens d'appui roulant (22) roulant sur ladite piste plane (23); lesdits moyens de retenue libérables entrant en prise avec lesdits moyens d'appui roulant (22) à la position arrière.

4. Véhicule à moteur selon l'une quelconque des revendications précédentes, **caractérisé en ce que** lesdits moyens de retenue (25) définissent au moins un siège de retenue (26), qui est raccordé par un rayon à ladite piste plane (23) par l'intermédiaire d'une rampe (27) et qui loge un verrou de serrage.

5. Véhicule à moteur selon l'une quelconque des revendications précédentes, **caractérisé en ce que** le châssis (1) comprend également des moyens de poussée (28, 29) exerçant une poussée pour le déplacement de ladite structure de support arrière (4) vers la position avant une fois que lesdits moyens de retenue (25) ont été libérés.

6. Véhicule à moteur selon la revendication 5, **caractérisé en ce que** lesdits moyens de poussée comprennent un ressort à gaz (29) situé dans une position intermédiaire entre lesdites structures de support avant et arrière (3, 4).

7. Véhicule à moteur selon la revendication 5, **caractérisé en ce que** lesdits moyens de poussée comprennent un ressort de torsion (28) associé auxdits premiers moyens d'articulation (10).
